# EUROPEAN PATENT APPLICATION

(11) **EP 2 301 365 A1**
(43) Date of publication of application: **30.03.2011**
(21) Application number: 10190128.8
(22) Date of filing: 22.12.2006
(51) Int. Cl.: A23C 19/00, A23C 19/068, A23C 19/05, A23C 19/16

(54) **Low-fat cheese with improved texture and its preparation**

(62) Divisional of application: 06127065.8
(71) Applicant: Campina Nederland Holding B.V., 5301 LB Zaltbommel (NL)
(72) Inventor: Penders, Johannes Antonius, 5324 AV, Ammerzoden (NL); Burghout, Herman Frank, 5241 XT, Rosmalen (NL)
(74) Representative: Swinkels, Bart Willem

(57) **Abstract**

The invention pertains to a process for preparing a semi-hard cheese having a reduced fat content, wherein the process involves the steps of: (a) providing milk, of which at least a part is skim milk; (b) acidifying the milk to a pH in the range of 5.5 - 6.5; and/or providing the milk with a calcium complexing agent; and (c) subsequent setting and scalding, wherein the temperature during scalding is maintained between 28 and 32 °C, and wherein the process further involves curd washing, to obtain a semi-hard cheese having pH > 5.2 after 4 weeks of subsequent ripening. The invention also pertains to a cheese obtainable by this process, wherein the cheese contains 0-20 wt% of fat, based on its total content, and 26 - 30 mg calcium per g protein.

## Description

### FIELD OF THE INVENTION

The present invention relates to a low-fat cheese of the semi-hard type, such as Gouda, Maasdam, Edam, and the like, having improved texture, and the preparation thereof.

### BACKGROUND OF THE INVENTION

Consumer awareness of the caloric content of food has increased considerably over the past few years and has brought about a demand for foods having a reduced fat content. The cheese industry is no different. However, a general problem in low-fat cheeses is the occurrence of detrimental effects in cheese texture. The fat contributes to the lubrication and creamy mouth feel. Further, it occupies space in the protein matrix thereby preventing the formation of a dense matrix which would result in a hard and/or gummy cheese. Substantial efforts have been mounted to prepare a low-fat cheese exhibiting the appropriate texture, as well as having the good flavor associated with its conventional fat-containing counterpart.

In general, various approaches can be followed, e.g. use of exopolysaccharide (EPS)/capsular polysaccharide (CPS) producing strains, fat replacers and whey protein concentrates (WPC). Despite all attempts to replace as much of the fat content of a semi-hard or hard cheese as possible, the success rate has been fairly limited. In EP-A-1.688.043 it is already mentioned that the reduction of fat in the natural cheese leads to textural defects such as increased firmness, rubberiness, elasticity, hardness, dryness and graininess. EP-A-1.688.043 itself teaches combining partially curdled low-fat milk particles with a fat-rich cheese milk, to obtain a cheese having an inhomogeneous fat distribution.

Johnson M.E. and Lucey J.A. "Calcium: a key factor in controlling cheese functionality" Austr. J. Dairy Techn. 61 (2006) p.147-153 describes the importance of controlling the rate and extent of acid development, and the effect of the insoluble calcium content (colloidal calcium phosphate) on cheese texture of normal-fat cheese. This is accomplished by controlling the acidity before rennet addition, e.g. pH 4.9 in case of a normal-fat hard cheddar.

In the field of process cheese products, such as Mozzarella, health concerns have resulted in US 5,549,916 to prepare a low fat cheese curd from a starting skim milk, wherein the curd in contact with whey solution having a pH of 4.7 - 5.5. The process provides an alternative to the conventional whey separation at a pH in excess of 5.5, to overcome the poor melting characteristics of conventional low fat process cheeses which are allegedly associated with excessive calcium.

However, apart from both being labeled as cheese, process cheeses have little in common with the semi-hard cheese of the invention, and a skilled person will thus not consider features of the one to play a role in the other. For once, the preparation of process or fresh cheese lacks the predominant ripening step common to all semi-hard cheeses, and to which ripening all other steps are adapted to.

Hence, in the art there is a need for a semi-hard cheese having a reduced fat content and still having a texture resembling that of its normal fat-containing counterpart, and for a process for obtaining such cheese. There is especially a need for a process to realize such a low-fat cheese with improved texture, wherein the traditional cheese manufacturing process is hardly affected and does not require any ingredients other than those already familiar to the cheese preparation process.

### SUMMARY OF THE INVENTION

It is an object of the invention to provide a low-fat cheese of the semi-hard type having textural properties which closely resemble that of its normal fat-containing counterpart, and which cheese does not exhibit the aforementioned rubber-like characteristics often associated with such low-fat cheese. It is an object of the invention to provide a low fat cheese texture which has a combination of high smoothness and intermediate firmness, a low stickiness is desirable in relation to the processibility of the low fat cheese.

It is also an object of the present invention to provide a process for preparing such a low-fat cheese having an improved texture, wherein the traditional and completely standardized process of cheese manufacture involves little changes, and setting time is controlled to industrially acceptable time periods.

It is a further object of the present invention to provide such a low-fat semi-hard cheese using a minimal selection of additional ingredients which are not normally associated with cheese manufacture.

It has now been found that the aforementioned undesirable rubbery texture in low-fat cheese may be overcome by an interplay of pre-acidification of the milk, addition of a calcium complexing agent, and an adapted scalding temperature, all to control the amount of calcium and water content. Especially a combination of pre-acidification of the milk and the addition of calcium complexing agents such as citrates gives good results.

The foregoing technical measures to control the calcium content of the cheese curd during setting have their effect on the actual setting time and the protein yield of the cheese formed. In addition, the water content is also affected. In order to control the amount of water in the cheese, the scalding temperature is lowered compared to the 40+ and other full fat counterparts, in order to obtain a low-fat cheese with the desired consistency. For full-fat Gouda and Edam cheese scalding temperatures of 35 and 33 °C are reported (Walstra et al. in Dairy Technology p. 670-671).

Further, with the accompanying decrease in buffering capacity, the amount of lactose may become too high, in turn leading to the ultimate cheese showing a crumbly consistency. The amount of lactose is traditionally leveled by means of conventional washing after whey separation. With the present invention curd washing may need to be intensified. The amount of water used in curd washing is determined by the pH of the cheese during and after ripening. Usually, a pH > 5.2 after 4 weeks of ripening is strived for.

### DETAILED DESCRIPTION OF THE INVENTION

The invention thus pertains to a semi-hard cheese having 0 - 20 wt% of fat, based on its total content, and having 26 - 30 mg calcium per gram protein. From the table on page 74 of "Nederlands Voedingsstoffen Bestand 2001" (NEVO) it can be calculated that regular fat-containing semi-hard cheeses, such as 20+, 30+, Edammer 40+, Maasdammer 45+, Goudse 48+, Room 60+, contain 32 - 35 mg calcium per gram protein. Hence, the calcium content is indicative of the process of preparation of the cheese according to the present invention, where the amount of soluble calcium in the milk to be set is controlled. This is also evidenced in the accompanying examples.

The calcium content of the cheese is the total amount of calcium present in the cheese, not to be mistaken by the amount of calcium which is associated with or bound to casein, the so called initially insoluble calcium or colloidal calcium phosphate, as it is addressed in Johnson *et al..* The total amount of calcium is measured by means of a COKZ method, pursuant method 10 of attachment 9 of "Landbouwkwaliteitsregeling" 1994.

With "semi-hard" it is meant cheeses which have been subjected to ripening for at least 4 weeks. Fresh or processed cheeses which do not involve such a ripening step are excluded from the invention. The invention has been found particularly suitable for Dutch varieties such as Gouda, Edam and Maasdam. The Dutch cheese is defined by Walstra et al. in chapter 2 of "Cheese: Chemistry, Physics and Microbiology, Volume 2, Major cheese Groups, ed. P.F. Fox, Chapman & Hall, ISBN 0 412 53510 6 (V.2)".

Many traditional cheeses have fat contents of more than 20 wt%, typically up to 30 wt% (based upon the total weight of the final cheeses). For example, a Gouda cheese has a fat content of about 30 wt% (total weight). Alternatively, the amount of fat may be defined in terms of the dry solids content. For instance, the aforementioned Gouda cheese corresponds to about 50 wt% based upon the dry matter (48+ cheese). The fat content of the low-fat cheese according to the present invention is preferably as low as possible, since there the problems of rubbery texture are normally most pronounced. The ultimate low-fat cheese has a fat content of 0 - 20 wt%, more preferably 0 - 15 wt%, based on its total content, and is appreciated by the consumers as the low-fat substitute for a normal fat-containing cheese. In terms of its dry solids content, the reduced-fat cheese of the invention preferably contains 0 - 35 wt% fat. Alternatively, the invention especially encompasses 0+, 5+, 10+, 15+ and 20+ cheeses, wherein the qualification "+" usually implies an upward margin of 4 %. Hence, 0+ cheese accordingly contains 0 - 4 wt% fat, based on its dry matter.

The reduced-fat cheese of the present invention has a firm consistency and a smooth texture, and a textural perception that is generally associated with a cheese having a higher fat content.

A reduced-fat cheese of the present invention may further be characterized by a water content of 58 - 62 % in the fat- and salt-free cheese, as measured after brining. With "fat- and salt-free cheese" it is understood that the original calculation of the water content of a cheese is recalculated to a fat- and salt-independent water content. The recalculated and fat-independent water content is based on the original water content divided by the total weight of the cheese after subtraction of its fat and salt content. Figures lower than 58.0 % result in a too hard and rubbery consistency, while those above 62.0 % have a too soft texture. Preferably, the moisture content in the fat-and salt-free cheese is about 59 - 61.5 %. The same numbers also apply for foil-ripened cheese after ripening.

The reduced-fat cheese preferably exhibits a pH > 5.2.

The invention also pertains to a process for preparing a semi-hard cheese having a reduced fat content, wherein the process involves the steps of: (a) providing milk, of which at least a part is skim milk; (b) acidifying the milk to a pH in the range of 5.5 - 6.5; and/or providing the milk with a calcium complexing agent; and (c) subsequent setting and scalding, wherein the temperature during scalding is maintained between 28 and 32 °C, and wherein the process further involves curd washing, to obtain a semi-hard cheese having pH > 5.2 after 4 weeks of subsequent ripening.

Therein, it is preferred that the setting time is between 15 and 60 minutes. The setting time should be such to give sufficient time to obtain a homogeneous rennet gel. Practically, a setting time of 20 - 40 minutes is desired. Pre-acidification, calcium addition and complexation are fine-tuned to reach an acceptable setting time within this range.

To arrive at the low fat content of the invention, it is preferred that at least part of the milk provided in step (a) is skim(med) milk. Knowing the desired fat content of the ultimate cheese, it is considered with the ambit of the skilled person's knowledge to determine the actual amount of skim milk. It is found that in terms of texture the cheese manufacture is not limited to particular amounts of skim milk. Good results are obtained even if skim milk is the only source. Preferably cow's milk or goat's milk are used as the milk source, most preferably cow's milk.

### Pre-acidification

Milk, including skim milk, has a pH of about 6.6 - 6.7. Since traditional cheese manufacture involves milk which is unprocessed at least in terms of its pH, the process of the present invention requires at least some kind of pre-acidification, to arrive at a lower pH, corresponding to a lower calcium level in the cheese. Therein, it is found that the pH should not be too low, e.g. pH 5.0, since the rate of subsequent setting would be impractically high. In fact, commercially acceptable results are obtained with a pH in the range of 5.5 - 6.5.

At a pH between 5.5 and 6 the setting temperature may be lowered, to compensate for the setting rate increase, for instance going from 32 °C to 28 °C for Gouda-type cheese. In addition or alternatively, the amount of rennet and/or calcium salts added to the milk to initiate setting in the first place could be lowered.

Best results in terms of cheese texture and minimum process changes are achieved if the pH of the milk is controlled to a pH ranging from 6 - 6.5, preferably 6.1 - 6.4, especially 6.2 - 6.3.

For sake of comparison, in the mere case a skilled person would consider a pre-acidification step known for processed cheese to apply in the manufacture of semi-hard cheese, the selected pH conditions would be too severe and result, if at all, in a bad-tasting cheese.

The acidification may e.g. be achieved by means of a starter, organic/inorganic acid, for instance hydrochloric acid, glucono-delta-lactone, citric acid, or CO₂ flushing, or combinations thereof. However, the invention is not considered to be limited hereto.

### Calcium complexing agent

As mentioned above, a reduced fat cheese may also be produced by incorporating a calcium complexing agent prior to setting, in order to scavenge calcium. Preferred calcium complexing agents are various types of phosphate, citrate or EDTA. The complexing agent(s) may be added to the milk provided in step (a). The amount of complexing agent can be estimated empirically, realizing it is dependent on the actual pH decrease and the initial amounts of calcium salts, if any, applied. Typically, 0.1 - 1.2, preferably 0.2 - 0.9, more preferably 0.3 - 0.7 mol of the calcium complexing agent may be employed per 100 kg of the mixture to be subjected to setting. Citrate, typically sodium citrate, is a preferred calcium complexing agent.

### Calcium source

Where a calcium complexing agent is employed, at normal milk pH, it is found that results are further improved when used in combination with a calcium source, preferably calcium chloride. Hence, it is preferred that, provided that the milk is not acidified, a calcium source is added before setting. Traditionally, calcium is already added to the starting milk, typically about 1 mmol CaCl₂, to enhance clotting rate

(Walstra et al. "Dairy Science and Technology" 2nd Ed. p635 publisher CRC Press Taylor & Francis). At these low amounts, no beneficial effects are observed. Usually a 35 % CaCl₂ solution is used for that purpose.

It requires larger amounts of soluble calcium to reduce the setting time to normal levels. The actual amount of calcium to be added can be determined by the skilled person, in order to fine-tune the setting time to a value within the aforementioned range. It is largely dependent on other conditions, especially the amount of calcium complexing agent used. It is preferred to add calcium in an amount of 0.3 - 1 mol per 100 kg milk, more preferably 0.4 - 0.9 mol calcium ions per 100 kg milk. Alternatively, in terms of 35 % CaCl₂-solution, it is preferred to incorporate at 90 - 300 ml, more preferably at least 120 - 270 ml per 100 kg milk.

However, the above does not apply if the milk is pre-acidified. If the process involves a pre-acidification step, in which step the calcium levels are controlled, i.e. lowered, the addition of calcium is deemed not necessary, and can thus be reduced. The calcium addition can particularly be dispensed with.

Best results are obtained if the skimmed milk is subjected to a pre-acidification step and calcium complexing agents are added. In such case, the addition of calcium complexing agents may precede, coincide or follow pre-acidification. Outside the most preferred range of pH 6.2 - 6.4, higher amounts, within the range of the invention, of calcium complexing agents should be employed in order to arrive at a cheese of acceptable texture.

### Curd washing

After setting, it is deemed necessary in cheese manufacture to lower the lactose content of the set cheese curd. Means for lowering the lactose content are already implemented in the conventional cheese manufacturing process, thus preventing the conversion into lactate during fermentation: Washing steps are usually performed after curd/whey separation. If these steps would be dispensed with, a cheese thus prepared would acquire a too low pH, hence becoming acid in taste, while the low pH during ripening moreover can have an effect on the consistency, the mouth feel. The pH of the cheese is a good criterion. Since the lactic acid bacteria of the starter cultures convert lactose into lactic acid, the pH of the cheese decreases gradually. As mentioned above, the pH of the cheese having pH > 5.2 after 4 weeks of ripening is typically strived for.

The necessity of curd washing is even more pronounced in the present invention, where after much of the calcium buffering capacity is lost in preceding steps. If no additional measures are taken, it is found that a too high lactose content will give a too low pH, which results in its turn in a crumbly texture and an acid/sharp flavor. The lactose content of the curd is preferably in the range of 2 - 2.5 wt%, based on the total weight of the cheese curd. The pH of the ripening cheese is a good indication thereof.

The lactose content of the pressed curd may be controlled using washing. It is found that the extensive curd washing is especially preferred if the process involves some kind of pre-acidification. Where normally washing is carried out with an amount of water of about 30 - 35 wt%, based on the total weight of the whey and curd mixture, in the present invention amounts of more than 40 wt%, preferably more than 50 wt% water is used in the washing of the curd/whey mixture. It may, compared to conventional washing, require up to 70 % water in subsequent washing steps to rinse out the lactose up to acceptable levels. Good results are obtained with up to about 60 % washing water. Beneficially, the extensive washing further adds to the removal of calcium, since more of the calcium salts are removed this way.

However, as taught in EP-A-977.488 and EP-A-1.101.408, it may be easier to remove lactose from the cheese milk than removing it from the curd using washing water, and in addition, cost-effectively save the amount of waste water. Therefore, alternatively, or in addition thereto, the cheese manufacture may start with milk which is wholly or partially subjected to an ultrafiltration step. The use of ultrafiltration to reduce the initial lactose content of the milk in step (a) is already mentioned in EP-A-1.101.408. With the aid of membranes and/or hollow phases with small pores protein particles form the milk cannot, but the lactose molecules can pass the membrane. It is preferred to reduce the normal lactose content of the milk from 4.0 - 4.6 wt% to below 3.0 wt%, more preferably 2.0 - 2.5 wt%, based on the total weight of the milk.

### Scalding

The forming of the cheese (culturing, renneting, cutting, whey separation, washing, curd pressing, brining and ripening) may advantageously be carried out in a manner known in the art.

However, as mentioned earlier on, the scalding temperature is to be adapted to maintain the water content of the low-fat cheese of the invention at an acceptable level. After curd washing, a scalding temperature higher than 33 °C is typically employed for normal-fat cheese (Walstra et al. in Dairy Technology p. 670-671). However, the scalding temperature is to be reduced for the reduced-fat counterparts pursuant the present invention, considering their water contents. The temperature during scalding is preferably between 28 and 32 °C, more preferably 29 - 31.5 °C, most preferably lower than 31 °C, in order to obtain a reduced-fat cheese, especially a 0+ or 10+ cheese, having the above-described water content.

### Ripening

The ripening step may be performed using "standard ripening" or "natural ripening". However, it is preferred to use foil ripening for at least part of the ripening period, since it beneficially prevents dry rind formation. This is for instance described in NL-1027710. However, the traditional ripening conditions are unaffected by the present invention and well-known to the skilled person.

The invention also pertains to a semi-hard cheese obtainable by the process of the invention, in so far as it has not been characterized by its calcium, fat, water and lactose content and its pH.

### EXAMPLES

### Comparitive example I - 0+ cheese from skim milk of pH 6.6 with a calcium source

A 0+ cheese was manufactured according to the process scheme of Edam cheese given by WALSTRA et al. in Dairy Technology p. 670. Pasteurized skim milk was conditioned at about 31 °C. Then calf rennet (CSK; 20 ml/100 kg milk) and 30 ml 35% CaCl₂ /100 kg milk were added.

A mesophilic culture was applied in a dosage rate of 0.4%. The setting time was monitored. The draining percentage was 40% and the amount of wash water used was 35%. During the experiments the scalding temperature was kept at about 29 °C. The block-shaped cheeses of about 12 kg were brined during about 40 hours. After brining the cheeses (2.6 % fat and 5.3 % NaCl on total solids) were foil packed and stored at 13 °C.

At an age of about 10 weeks the cheeses were sensory graded by a panel of 12 technical experts. The scale used ranged from 4 to 8, in which 4 was bad and 8 excellent. The smoothness and firmness which are experienced in the mouth played an important role in the assessment. The results of the test are plotted in the table. The setting time, protein yield and calcium and protein levels are also indicated in the table, where the cheese is referred to by its internal trial number 6196. The amount of calcium was 32.4 mg per g protein. The moisture content in the fat- and salt-free cheese was 59.3 %.

Although the 0+ cheese shows a favourable protein yield, the setting time was extended and the cheese texture poor.

### Example 1 - Effect of pre-acidification and scalding temperature

The cheese manufacture described in comparative example 1 was repeated, but no CaCl₂ was employed.

The pH of the starting milk was adjusted with 1N HCl at setting temperature. To avoid local pH extremes, slow addition and vigorous stirring were applied. After reaching the desired pH acid addition was continued until the pH was stable for at least 10 min. Then a start was made with the setting procedure.

The amount of wash water was increased to 60% to reduce the amount of buffering substances in order to maintain the pH in the cheese at an acceptable level about 5.3.

The experiment was performed once at a scalding temperature of 32.3 °C (6305), and once at 30.2 °C (6308).

A 0+ cheese was obtained containing 1.0% fat and 4.1 % salt on total solids. The amount of calcium decreased to 27.3 and 28.5 mg per g protein, while the moisture content in the fat- and salt-free cheese was 58.0 and 59.6 %, respectively. Further details are given in the table.

The setting time was significantly reduced with pH decrease. However, only when the scalding temperature was decreased to 30.2 °C the moisture content of the cheese was at a desirable level, thus resulting in an acceptable score (6.0).

**Table - Sensory evaluation of 0+ cheese texture**

| | Comp. Ex I | Example 1 | | Example 2 | |
|---|---|---|---|---|---|
| | 6196 | 6305 | 6308 | 6309 | 6307 |
| pH before setting | 6.6 | 6.2 | 6.2 | 6.2 | 6.4 |
| CaCl₂ (ml / 100 kg milk) | 30 | 0 | 0 | 0 | 0 |
| Citrate (g / 100 kg milk) | 0 | 0 | 0 | 75 | 75 |
| Setting temperature (°C) | 31.0 | 31.9 | 31.9 | 31.9 | 31.9 |
| Setting time (min) | 59 | 14 | 15 | 35 | 64 |
| Scalding temperature (°C) | 29.2 | 32.3 | 30.2 | 30.1 | 30.2 |
| Wash water (%) | 35 | 60 | 60 | 60 | 60 |
| Moisture after brining (%) | 57.4 | 56.8 | 58.5 | 59.6 | 60.1 |
| Moisture content in fat and salt-free cheese (%) | 59.3 | 58.0 | 59.6 | 60.8 | 61.5 |
| pH after brining | 5.3 | 5.4 | 5.3 | 5.3 | 5.3 |
| Protein content cheese (%) | 33.6 | 36.6 | 35.5 | 33.3 | 32.8 |
| Salt/total solids (%) | 5.3 | 4.0 | 4.3 | 4.9 | 5.1 |
| Calcium mg / 100g cheese | 1090 | 1000 | 1010 | 921 | 955 |
| Calcium mg / g protein | 32.4 | 27.3 | 28.5 | 27.7 | 29.1 |
| Protein yield (%) | 75.2 | 74.8 | 74.6 | 72.4 | 68.5 |
| Sensory grading | 4.2 | 5.1 | 6.0 | 6.9 | 6.1 |

### Example 2 - Effect of pre-acidification and citrate

0+ Cheese was prepared following the recipe of comparative example I, adding 75 g sodium citrate per 100 kg milk. The pH was adjusted according to the scheme of example 1. In trial 6309 the pH was lowered to 6.2, trial 6307 concerned a pH before setting of 6.4. In both cases, the scalding temperature was kept at about 30 °C, and the amount of wash water was increased compared to comparative example I to reduce the amount of buffering substances in order to maintain the pH in the cheese at an acceptable level about 5.3.

The 0+ cheeses obtained had a fat content of 0.9% on total solids, while its salt content was 5.1% on total solids. The amount of calcium was 27.7 and 29.1 mg per g protein, while the moisture content in the fat- and salt-free cheese was 60.8 and 61.5%, respectively. The results in table 1 show that the setting time was conveniently low and the protein yield higher when pH was 6.2, while both cheeses were well appreciated.

### Example 3 - Effect of citrate on 0+ cheese from skim milk of pH 6.6

Cheese manufacture described in comparative example I was repeated. This time 241 ml CaCl₂ /100 kg milk was added. The pH of the milk was not adjusted, pH 6.7.

The same procedure was repeated, further adding 150 g sodium citrate per 100 kg milk. Scalding was performed at 29 °C.

0+ cheeses were obtained containing 1.9% fat and 5.7% salt on total solids. The setting time for these two cheeses (trial numbers 6108 and 6111) increased from 17 to 89 minutes. Inspite of the extended setting time, a sensory score of 6.1 was obtained for 6111.

## Claims

1. A semi-hard cheese having 0 - 20 wt% of fat, based on its total content, and having 26 - 30 mg calcium per g protein.

2. The cheese according to claim 1, having 0 - 15 wt% fat.

3. The cheese according to claim 1 or 2, having a fat-independent water content in the cheese of 58 - 62 % after brining, wherein said fat-independent water content is the original water content divided by the total weight of the cheese after subtraction of its fat and salt content.

4. A process for preparing a semi-hard cheese having a reduced fat content, wherein the process involves the steps of:
(a) providing milk, of which at least a part is skim milk;
(b) acidifying said milk to a pH in the range of 5.5 - 6.5; and/or providing said milk with a calcium complexing agent; and
(c) subsequent setting and scalding, wherein the temperature during scalding is maintained between 28 and 32 °C,
and wherein the process further involves curd washing, to obtain a semi-hard cheese having pH > 5.2 after 4 weeks of subsequent ripening.

5. The process according to claim 4, wherein the pH of said milk is controlled in step (b) to a pH ranging from 6.2 - 6.4.

6. The process according to claim 4 or 5, wherein 0.1 - 1.2 mol calcium complex agent is employed per 100 kg of said milk.

7. The process according to any one of claims 4 - 6, wherein, provided that said milk is not acidified, a calcium source is added before setting.

8. The process according to any one of claims 4 - 7, wherein said curd washing involves more than 40 wt% water, based on the total weight of the whey and curd mixture.

9. The process according to any one of claims 4 - 8, wherein the lactose content is controlled by using wholly or partially ultrafiltrated milk in step (a).

10. The process according to any one of claims 4 - 9, wherein said ripening step involves foil ripening.
